Europäisches Patentamt

European Patent Office

Office européen des brevets

(11) Publication number: 0 512 116 A1

# EUROPEAN PATENT APPLICATION
## published in accordance with Art. 158(3) EPC

(21) Application number: 91919810.1

(22) Date of filing: 15.11.91

(86) International application number:
PCT/JP91/01569

(87) International publication number:
WO 92/09940 (11.06.92 92/13)

(51) Int. Cl.⁵: G05B 19/18

(30) Priority: 22.11.90 JP 319765/90

(43) Date of publication of application:
11.11.92 Bulletin 92/46

(84) Designated Contracting States:
CH DE IT LI

(71) Applicant: FANUC LTD.
3580, Shibokusa Aza-Komanba, Oshino-mura
Minamitsuru-gun, Yamanashi 401-05(JP)

(72) Inventor: IKEDA, Yoshiaki, Fanuc Mashion
Harimomi 6-310

3537-1, Shibokusa Oshinomura
Minamitsuru-gun
Yamanashi 401-05(JP)
Inventor: HIROHAMA, Hideyuki, Fanuc Dai-3
Vira-karamatsu
3527-1, Shibokusa Oshinomura
Minamitsuru-gun
Yamanashi 401-05(JP)

(74) Representative: Brunner, Michael John et al
GILL JENNINGS & EVERY 53-64 Chancery
Lane
London WC2A 1HN(GB)

(54) METHOD FOR EXECUTING PROGRAM FOR CNC EQUIPMENT.

(57) A method for executing programs for a CNC equipment by which both a sequence program and a CNC program are executed with one processor. A means (3) for determining the frequency of a timer automatically determines the frequency of the execution time of the CNC program according to a time $T_b$ corresponding to the information on an actual added function. A timer (4) outputs this frequency to a processor (11). Since the processor (11) executes alternately the CNC program and the split sequence program on this frequency, the execution quantity of the sequence program per time is increased.

FIG. 1

EP 0 512 116 A1

## Technical Field

The present invention relates to a program execution system for executing a sequence program and a CNC program by a single CPU, and in particular, to a program execution system used in a CNC device and capable of processing the sequence program at a high speed.

## Background Art

Conventionally, in a CNC device, when executing a sequence program and a CNC program by a single CPU, the sequence program is divided into a plurality of programs, and the divided sequence program and the CNC program are alternately executed.

Nevertheless, since an execution time of the CNC program is determined on the assumption that an additive functional information of the CNC device is in a maximum state, when an actual additive functional information has not reached such a state, a time needed for processing the CNC program becomes unnecessarily long. Therefore, an amount of the sequence program that can be executed in a specified time is reduced, and accordingly, the entire sequence program can not be processed at a high speed.

## Disclosure of the Invention

The present invention has been made in view of the above circumstances. Therefore, an object of the present invention is to provide a system for executing a program of the CNC device, which system increases the amount of sequence program that can be executed in a specified time, and is capable of processing the entire sequence program at a high speed.

To solve the above problems, according to the present invention, in a program execution system of a CNC device for executing a sequence program and a CNC program by a single CPU, there is provided a program execution system for a CNC device, the system being characterized by comprising an automatic timer cycle decision means for automatically determining a timer cycle by calculating an execution time of the CNC program in accordance with the additive functional information of the CNC device, a timer outputting a timer signal according to the determined cycle of the timer, and a program execution means for alternately executing a sequence program divided into a specified time and the CNC program, in the determined timer cycle.

The automatic timer cycle decision means calculates the execution time of the CNC program in accordance with the additive functional information of the CNC device, and thus the CNC program is effectively executed without wasting time. Further, the CNC program and the divided sequence program are alternately executed, and therefore, an amount of the sequence program that can be executed in a specified time is increased.

## Brief Description of the Drawings

Fig. 1 is a block diagram showing a programing system of a CNC device;
Fig. 2 (a) is a time chart of the maximum additive functional time;
Fig. 2 (b) is a time chart of the actual additive functional time; and
Fig. 3 is a structural diagram showing an outline of hardware of a numerical control device for carrying out the present invention.

## Best Mode of Carrying Out the Invention

An embodiment of the present invention will be hereinafter described with reference to the drawings.

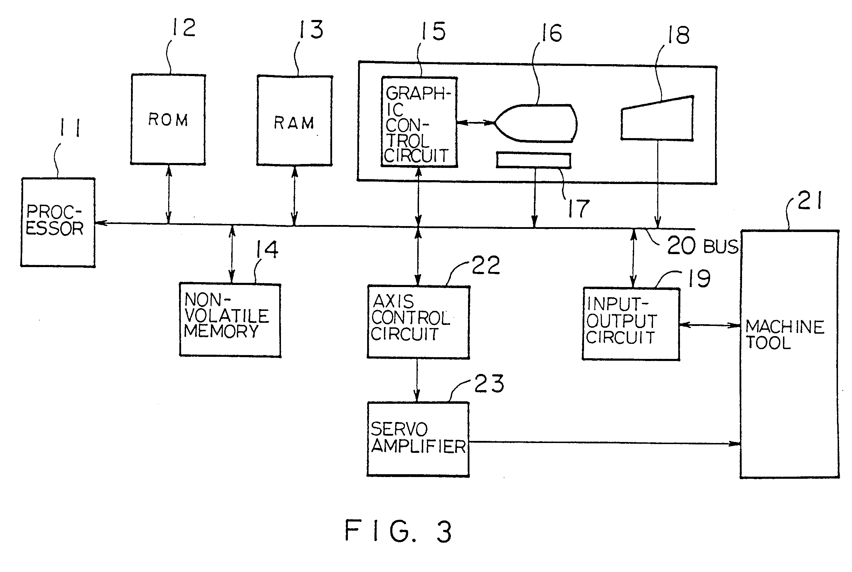

Fig. 3 is a structural diagram showing an outline of hardware of a numerical control device for carrying out the present invention. As shown in the figure, a processor 11 controls the entire numerical control device according to system programs stored in a ROM 12, and further, the processor 11 controls a machine tool 21 according to sequence programs stored in the ROM 12.

An EPROM or EEPROM is used as the ROM 12, and a SRAM or the like is used as a RAM 13, and various data or input-output signals are stored therein.

A CMOS, which is backed up by a battery, is used in a nonvolatile memory 14, so that parameters, pitch error corrections, tool corrections, and the like, which should be saved, are stored in the memory even if a power source is turned off.

A graphic control circuit 15 converts a digital signal into a signal for a display and transmits that signal to a screen 16. A CRT or liquid crystal display is used as the screen 16, and the positions of each axis, a state of the input-output signal, and the like are displayed thereon. A change of these displayed items is effected by a software key 17 arranged at a lower portion of the screen 16.

A keyboard 18 comprises symbolic keys, numeric keys, and the like for inputting required configurations and data.

An input-output circuit 19 receives the signal, which is sequence-processed by the processor 11, through a bus 20 and controls the machine tool 21 by outputting the corresponding output signal. Further, the circuit 19 receives a signal supplied from a machine side and transmits the corresponding signal to the processor 11 through the bus 20.

An axis control circuit 22 receives a move command for an axis from the processor 11 and outputs the move command for the axis to a servo amplifier 23. The servo amplifier 23 receives the move command and drives a servo-motor of the machine tool 21. These components are interconnected by the bus 20.

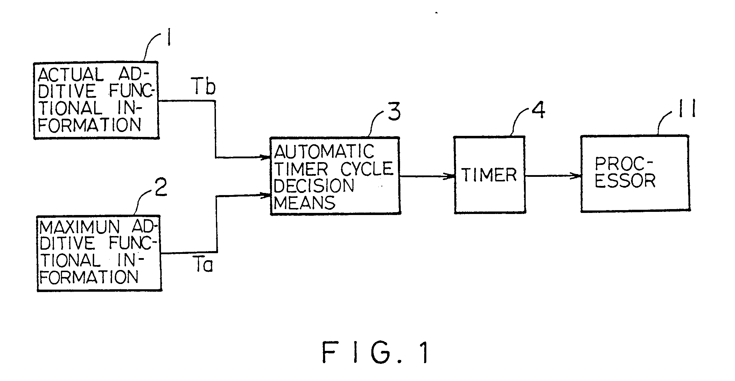

Next, a program execution procedure of the CNC device mentioned above is described with reference to a block diagram shown in Fig. 1.

An actual additive functional information 1 and a maximum additive functional information 2 are stored in the nonvolatile memory 14. A parameter to be stored as an additive functional information is a time needed for the minimum requirements for executing CNC programs, for example, Tb is stored as the parameter for the actual additive functional time 1, and Ta is stored as the parameter for the maximum additive functional time 2.

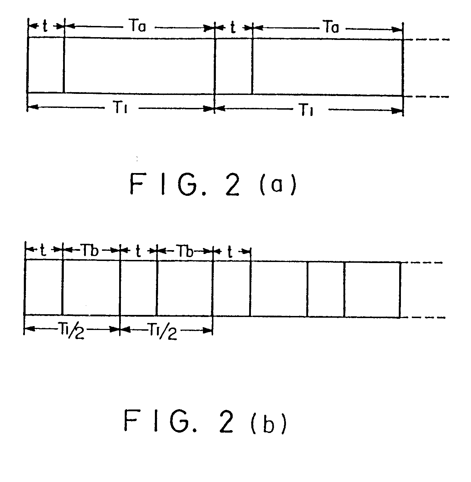

An automatic timer cycle decision means 3 calculates a timer cycle for timing an execution timing of a sequence program according to the values of these additive functional parameters Ta and Tb. More concretely, as seen from a time chart of the maximum additive functional time shown in Fig. 2 (a), a sum $T_1$ of a division time t of the sequence program and an execution time Ta of the CNC program in the maximum additive functional time is first stored as the timer cycle in the maximum additive functional time, then, a sum (t + Tb) of the division time t of the sequence program and an execution time Tb of the CNC program in the actual additive functional time is calculated, and finally a timer cycle in the actual additive functional time is calculated on the basis of the ratio of the calculated (t + Tb) and the timer cycle $T_1$ in the maximum additive functional time. Fig. 2 (b) shows a time chart when the timer cycle in the actual additive function time becomes $T_1/2$.

Accordingly, when the timer cycle is determined, the timer 4 outputs signals at every determined cycle, and a processor 11 executes the sequence program every time a signal is output. Therefore, it is obvious that a greater amount of the sequence program can be executed in a specified time than in the prior art.

Note, with regard to the above explanation, although the timer cycle is set to be 1/2 of the maximum additive functional time, these cycles change in accordance with the additive functional information.

As seen from the above description, according to the present invention, the execution time of CNC program is calculated in accordance with the additive functional information of the CNC device, and thus the CNC program is effectively executed without wasting time. Further, the CNC program and the division sequence program are alternately executed according to the timer cycle, and therefore, the amount of sequence program that can be executed in a specified time is increased, and thus the processing speed is greatly increased.

**Claims**

1. In a program execution system of a CNC device for executing a sequence program and a CNC program by a single CPU, a program execution system of a CNC device, comprising:

an automatic timer cycle decision means for automatically determining a timer cycle by calculating an execution time of the CNC program in accordance with additive functional information of the CNC device;

a timer outputting a timer signal according to the determined cycle of the timer; and

a program execution means for alternately executing a sequence program divided into a specified time and the CNC program by the determined timer cycle.

2. A program execution system of a CNC device according to claim 1, wherein the timer cycle is determined by calculating a sum of the execution time of the CNC program and the execution time of the divided sequence program.

EP 0 512 116 A1

```
┌──────────────┐  1
│ ACTUAL AD-   │
│ DITIVE FUNC- │  Tb
│ TIONAL IN-   │────────┐
│ FORMATION    │        │
└──────────────┘        │        ┌──────────────┐  3      ┌────────┐  4      ┌──────────┐  11
                        ├───────▶│ AUTOMATIC    │        │        │        │          │
                        │        │ TIMER CYCLE  │───────▶│ TIMER  │───────▶│ PROC-    │
┌──────────────┐  2     │        │ DECISION     │        │        │        │ ESSOR    │
│ MAXIMUN AD-  │        │        │ MEANS        │        └────────┘        └──────────┘
│ DITIVE FUNC- │  Ta    │        └──────────────┘
│ TIONAL IN-   │────────┘
│ FORMATION    │
└──────────────┘
```

F I G. 1

FIG. 2 (a)

FIG. 2 (b)

FIG. 3

# INTERNATIONAL SEARCH REPORT

International Application No PCT/JP91/01569

## I. CLASSIFICATION OF SUBJECT MATTER (if several classification symbols apply, indicate all) 6

According to International Patent Classification (IPC) or to both National Classification and IPC

Int. Cl$^5$ G05B19/18

## II. FIELDS SEARCHED

| Minimum Documentation Searched 7 | |
|---|---|
| Classification System | Classification Symbols |
| IPC | G05B19/18, G05B19/05 |

| Documentation Searched other than Minimum Documentation to the Extent that such Documents are Included in the Fields Searched 8 | | |
|---|---|---|
| Jitsuyo Shinan Koho | 1932 – 1992 | |
| Kokai Jitsuyo Shinan Koho | 1971 – 1992 | . |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 02-24703 (Mitsubishi Electric Corp.), January 26, 1990 (26. 01. 90), (Family: none) | 1-2 |
| Y | JP, A, 61-86806 (Shimadzu Corp.), May 2, 1986 (02. 05. 86), (Family: none) | 1-2 |
| A | JP, A, 61-220001 (Mitsubishi Electric Corp.), September 30, 1986 (30. 09. 86), (Family: none) | 1-2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| February 6, 1992 (06. 02. 92) | February 25, 1992 (25. 02. 92) |
| International Searching Authority | Signature of Authorized Officer |
| Japanese Patent Office | |